(19) Europäisches Patentamt
European Patent Office
Office européen des brevets

(11) **EP 3 184 783 A1**

(12) **EUROPÄISCHE PATENTANMELDUNG**

(43) Veröffentlichungstag:
28.06.2017  Patentblatt 2017/26

(51) Int Cl.:
*F02C 9/28* [(2006.01)]          *F01D 17/04* [(2006.01)]
*G01M 15/14* [(2006.01)]

(21) Anmeldenummer: **15201553.3**

(22) Anmeldetag: **21.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder: **Savilius, Nicolas**
**45359 Essen (DE)**

(54) **BETRIEB EINER GASTURBINE AUF GRUNDLAGE EINER BERECHNUNG DER KRIECHDEHNUNG**

(57)    Die Erfindung betrifft eine Regelvorrichtung und ein Verfahren zum Betrieb einer Gasturbine (1) umfassend folgende Schritte: Ermitteln der Kriechgeschwindigkeit wenigstens eines Bauteils (2) der Gasturbine für ein vorbestimmtes Zeitintervall ($T_i$); Berechnen der Kriechdehnung ($\varepsilon$) aus der Kriechgeschwindigkeit ($d\varepsilon/dt$) für das wenigstens eine Bauteil über das vorbestimmte Zeitintervall; Bestimmen der Gesamtkriechdehnung ($\varepsilon_{ges}$) für einen Gesamtzeitraum ($T_{ges}$), welcher das vorbestimmte Zeitintervall ($T_i$) umfasst; und Einleiten einer Maßnahme zur Betriebsänderung der Gasturbine, wenn die Gesamtkriechdehnung ($\varepsilon_{ges}$) einen Grenzwert ($\varepsilon_{limit}$) erreicht oder diesen überschreitet. Die Regelvorrichtung (10) umfasst eine Berechnungseinheit (11) und eine Regelungseinheit (12).

FIG 2

EP 3 184 783 A1

**Beschreibung**

Die vorliegende Erfindung betrifft ein Verfahren zum Betrieb einer Gasturbine sowie eine Regelvorrichtung und eine solche Gasturbine.

Aufgrund der hohen Temperaturen des in einer Gasturbine als Arbeitsmittel genutzten Heißgases kommt es zu Materialalterungsprozessen, welche maßgeblichen Einfluss auf die Lebensdauer von Bauteilen einer Gasturbine haben. Bei diesen temperaturabhängigen Alterungsprozessen ist insbesondere der Prozess des Kriechens problematisch, welcher als eine plastische Verformung eines Werkstoffes aufgrund von Temperatureinwirkung, Spannungseinflüssen und anderen Faktoren im Laufe der Zeit verstanden werden kann. Das Kriechen wird bei zahlreichen technischen Vorrichtungen bereits in der Bauphase berücksichtigt, um ein sicheres und vorteilhaftes Verhalten der Bauteile im Laufe deren Betriebszeit gewährleisten zu können.

Gerade bei metallischen Werkstoffen, wie sie in einer Gasturbine vielfach vorgesehen werden, kommt es überhalb einer vorbestimmten Übergangstemperatur zu einer thermischen Aktivierung, so dass Strukturänderungen zeitlich ablaufen. Die betreffende Übergangstemperatur ist hierbei werkstoffabhängig und beträgt typischerweise etwa 30% bis 60% der Schmelztemperatur des Werkstoffes in Kelvin. Die Strukturänderungen führen zu einer Anzahl an unterschiedlichen Werkstoffzustandsänderungen, welche isoliert oder auch kumuliert auftreten können. Das Kriechen von metallischen Werkstoffen beruht im Wesentlichen auf transkristallinen Vorgängen, wie etwa den Versetzungsbewegungen und der Leerstellendiffusion. Jedoch können auch interkristalline Vorgänge wie das Korngrenzengleiten oder die Korngrenzendiffusion einen Beitrag zum Kriechen leisten. Diese unterschiedlichen Kriechmechanismen treten meist gleichzeitig miteinander bzw. unmittelbar nacheinander gekoppelt auf. Sie führen meist zu einer Herabsetzung der Festigkeit des metallischen Werkstoffes, wodurch Bauteilversagen ausgelöst werden kann. Die Folge für den Betrieb einer Gasturbine kann etwa die Kollision von Laufschaufeln an der Gehäusewand sein, sowie auch die Formänderung von hochbelasteten Kerben an Turbinenwellen oder die Leckage an Verbindungsstücken.

Bei einer Gasturbine wird dem Phänomen des Kriechens meist dadurch Rechnung getragen, dass Werkstoffe verwendet werden, die eine hohe Kriechfestigkeit aufweisen. Derartige Werkstoffe (zum Beispiel Nickel-Basis-Legierungen) sind jedoch sehr teuer und in vielen Fällen wirtschaftlich unrentabel einzusetzen. Problematisch ist weiterhin, dass bei einem typischen Betrieb einer Gasturbine das Kriechverhalten des Gesamtsystems der Gasturbine nur eingeschränkt bekannt ist. Um nun dennoch einen sicheren Betrieb gewährleisten zu können, können auch Leistungsbeschränkungen dem Betrieb der Gasturbine auferlegt werden, um so etwa die maximal zulässige Kriechgrenze eines Bauteils nicht zu überschreiten. Ebenfalls ist die Einschränkung der zulässigen Gesamtbetriebszeit eine Maßnahme, um kriechbedingtes Materialversagen vermeiden zu können. Damit wird jedoch der Betrieb der Gasturbine unnötig in Bezug auf seine Leistung bzw. auf die Lebensdauer der Gasturbine geändert. Dies wiederum ist wirtschaftlich unerwünscht und reduziert auch die Betriebsbereitschaft einer Gasturbine für ihren Betreiber.

Es ist nun ein technisches Erfordernis, diese aus dem Stand der Technik bekannten Nachteile zu vermeiden. Insbesondere soll ein Verfahren zum Betrieb einer Gasturbine vorgeschlagen werden, welches einen wirtschaftlichen Betrieb der Gasturbine ermöglicht unter Berücksichtigung der kriechbedingten Alterung der Bauteile der Gasturbine.

Die der Erfindung zugrunde liegenden Aufgaben werden gelöst durch ein Verfahren gemäß Anspruch 1 sowie eine Regelvorrichtung gemäß Anspruch 11 und eine Gasturbine gemäß Anspruch 12. Insbesondere werden die der Erfindung zugrunde liegenden Aufgaben gelöst durch ein Verfahren zum Betrieb einer Gasturbine umfassend folgende Schritte:

- Ermitteln der Kriechgeschwindigkeit wenigstens eines Bauteils der Gasturbine für ein vorbestimmtes Zeitintervall,
- Berechnen der Kriechdehnung aus der Kriechgeschwindigkeit für das wenigstens eine Bauteil über das vorbestimmte Zeitintervall,
- Bestimmen der Gesamtkriechdehnung für einen Gesamtzeitraum, welcher das vorbestimmte Zeitintervall umfasst und
- Einleiten einer Maßnahme zur Betriebsänderung der Gasturbine wenn die Gesamtkriechdehnung einen Grenzwert erreicht oder diesen überschreitet.

Weiterhin wird die der Erfindung zugrunde liegenden Aufgaben gelöst durch eine Regelvorrichtung, welche dazu ausgebildet ist, das vorab wie auch nachfolgend beschriebene Verfahren auszuführen, wobei die Regelvorrichtung eine Berechnungseinheit umfasst, welche die Ermittlung der Kriechdehnungsgeschwindigkeit, die Berechnung der Kriechdehnung aus der Kriechgeschwindigkeit, sowie die Bestimmung der Gesamtkriechdehnung für den Gesamtzeitraum ermöglicht, und ferner eine Regelungseinheit umfasst, welche die Betriebsänderung der Gasturbine veranlasst.

Darüber hinaus werden die der Erfindung zugrunde liegenden Aufgaben gelöst durch eine Gasturbine, welche eine vorab wie auch nachfolgend beschriebene Regelvorrichtung aufweist.

An dieser Stelle ist darauf hinzuweisen, dass der Gesamtzeitraum größer oder gleich dem vorbestimmten Zeitintervall ist. Insofern ist auch die Gesamtkriechdehnung größer oder gleich der einzelnen Kriechdehnung, die für das vorbestimmte Zeitintervall bestimmt wurde.

Die Gesamtkriechdehnung ist ein Maß für die Alterung der Bauteile einer Gasturbine. Durch einen einfachen Vergleich der bestimmten Gesamtkriechdehnung mit einem Grenzwert, kann so etwa ermittelt werden, ob der Betrieb zu einem erwünschten oder einem unerwünschten Alterungsprozess führt. Je nach Ergebnis kann anschließend eine Maßnahme eingeleitet werden, welche den Betrieb der Gasturbine ändert, um insbesondere den Alterungsprozess zu verlangsamen.

Die Gesamtkriechdehnung wird hierbei aus einzelnen Kriechdehnungen bestimmt, welche für vorbestimmte Zeitintervalle berechnet werden. Die einzelnen Kriechdehnungen ihrerseits werden wiederum aus den Kriechgeschwindigkeiten für die vorbestimmten Zeitintervalle bestimmt. Ist nun für den Gesamtzeitraum die Gesamtkriechdehnung bekannt, können daraus Rückschlüsse gezogen werden auf den Alterungsprozess der Bauteile und somit regelungstechnisch eine Entscheidung getroffen werden, ob eine Betriebsänderung der Gasturbine vorzunehmen ist oder nicht. Es ist insbesondere eine Änderung der Gasturbine dann vorzunehmen, wenn die Gesamtkriechdehnung einen Grenzwert erreicht oder diesen überschreitet. Dieser Grenzwert seinerseits kann für verschiedene Zeiten definiert sein. Typischerweise ist der Grenzwert abhängig von dem Gesamtzeitraum, wobei mit zunehmender Länge des Gesamtzeitraums auch der Grenzwert für die Gesamtkriechdehnung zunimmt. In anderen Worten kann sich der Grenzwert je nach Gesamtzeitraum unterscheiden.

Ergibt nun der Vergleich zwischen der bestimmten Gesamtkriechdehnung mit dem Grenzwert, dass die Alterung der einzelnen Bauteile der Gasturbine bereits so weit fortgeschritten ist, dass eine vorzeitige bzw. übermäßige Alterung eingetreten ist bzw. in naher Zukunft eintreten wird, so kann die Regelvorrichtung dafür sorgen, dass eine Maßnahme zur Betriebsänderung der Gasturbine eingeleitet wird. Derartige Maßnahmen sind typischerweise mit einer Verminderung der Betriebstemperatur verbunden, so dass der Kriechvorgang an den betreffenden Bauteilen langsamer voranschreitet.

Ausführungsgemäß können auch die einzelnen Kriechdehnungen bzw. die Gesamtkriechdehnung für mehrere Bauteile der Gasturbine bestimmt werden. Eine Maßnahme zur Betriebsänderung kann etwa dann durch die Regelvorrichtung eingeleitet werden, wenn wenigstens eine der bestimmten Gesamtkriechdehnungen einen zugeordneten Grenzwert erreicht oder diesen überschreitet. Die Grenzwerte sind hierbei wieder spezifisch für das jeweils betrachtete Bauteil, so dass typischerweise mehrere Grenzwerte betrachtet werden müssen, soweit unterschiedliche Bauteile der Gasturbine hinsichtlich ihrer Kriechdehnung und ihrer Gesamtkriechdehnung untersucht werden. Durch die Bestimmung der Gesamtkriechdehnung eines bzw. mehrerer Bauteile der Gasturbine kann so für ein jeweils gewähltes Design der betreffenden Bauteile dieses bis an seine technischen Auslegungsgrenzen genutzt werden. In anderen Worten kann der Alterungsprozess der betreffenden Bauteile soweit vorangetrieben werden, bis deren sichere Betriebsgrenze erreicht ist. Ein frühzeitiger Bauteilaustausch kann damit vermieden werden, wodurch dem Betreiber ein signifikanter wirtschaftlicher Vorteil entsteht.

Gemäß einer ersten Ausführungsform der Erfindung ist vorgesehen, dass der Gesamtzeitraum Zeiten umfasst, welche alle im oder zeitlich vor dem vorbestimmten Zeitintervall liegen. Damit stellt sich die Gesamtkriechdehnung als diejenige Kriechdehnung dar, welche sich seit einem Startzeitpunkt bis zum Ende des vorbestimmten Zeitintervalls eingestellt hat. Die ermittelte Gesamtkriechdehnung erlaubt also die Bestimmung eines aktuellen Alterungszustandes des betreffenden Bauteils aufgrund der zeitlich bisher erfolgten Gesamtkriechdehnung. Überschreitet diese nun aktuell festgestellte Gesamtkriechdehnung einen Grenzwert, werden entsprechende Maßnahmen eingeleitet, um den Alterungsprozess zu vermindern, bzw. sollte das Bauteil nicht mehr sicher verwendet werden können, kann auch eine Wartungsmaßnahme etwa zum Austausch des Bauteils angezeigt sein.

In einer alternativen Ausführungsform der Erfindung kann auch vorgesehen sein, dass der Gesamtzeitraum Zeiten umfasst, welche sowohl in oder zeitlich vor dem vorbestimmten Zeitintervall liegen, wie auch zeitlich nach dem vorbestimmten Zeitintervall liegen. Ist das vorbestimmte Zeitintervall das zeitlich aktuelle Zeitintervall, liegen in anderen Worten auch Zeiten damit in der Zukunft und die Gesamtkriechdehnung ermöglicht folglich eine Vorhersage für die Gesamtkriechdehnung zu einem zukünftigen Zeitpunkt. Die so ermittelte Gesamtkriechdehnung erlaubt also die Bestimmung eines zukünftigen Alterungszustandes des betreffenden Bauteils aufgrund der zeitlich erfolgten wie auch der auch zeitlich zu erwartenden Gesamtkriechdehnung. Damit kann bereits frühzeitig eine Maßnahme zur Betriebsänderung der Gasturbine eingeleitet werden, um den Alterungsprozess des betreffenden Bauteils hinauszuzögern. Insbesondere kann damit vermieden werden, dass das betreffende Bauteil zu früh ausgetauscht wird, da mit dessen Austausch ja erst zukünftig zu rechnen ist. Für die eingeleiteten Maßnahmen zur Betriebsänderung der Gasturbine zu einer verlangsamten zukünftigen Kriechdehnung, kann somit der Wartungsprozess bzw. der Austausch des betreffenden Bauteils zeitlich hinausgezögert werden.

Gemäß einer weiteren vorteilhaften Ausführungsform der Erfindung ist vorgesehen, dass die Kriechgeschwindigkeit mit Hilfe der Formel von Norton approximiert wird. Die Formel von Norton erlaubt hierbei die Berechnung der Kriechgeschwindigkeit $d\varepsilon/dt$ unter Kenntnis der Spannung $\sigma$ wie auch der Aktivierungsenergie Q, der Wärmekapazität R sowie der Temperatur des betreffenden Bauteils T. Ist darüber hinaus der Spannungsexponent N bekannt, kann die Kriechgeschwindigkeit gemäß Gleichung 1 analytisch gut approximiert werden.

$$d\varepsilon/dt = \sigma^N * \exp(-Q/(RT)) \qquad\qquad \text{(Gleichung 1).}$$

Die Formel von Norton beschreibt eine rein spannungsabhängige Kriechdehnung. Die Kriechgeschwindigkeit $d\varepsilon/dt$ ist hierbei als Potenzfunktion der Spannung $\sigma$ beschrieben, wobei der Spannungsexponent N eine temperaturabhängige Materialkonstante ist. Der Spannungsexponent N gilt auch als Indikator für den Verformungsmechanismus. Je nach Verformungsmechanismus kann ein Spannungsexponent von etwa 1 bis 7 angenommen werden. Bei sehr niedrigen Spannungen bzw. sehr geringen Kriechgeschwindigkeiten können Spannungsexponenten von 1 auftreten, wobei die Kriechdehnung hierbei meist auf Diffusionskriechen zurückzuführen ist.

Für genauere Berechnungen der zeit- und temperaturabhängigen Kriechgeschwindigkeit $d\varepsilon/dt$ bei Hochtemperaturbeanspruchung können jedoch auch genauere Berechnungsmodelle herangezogen werden, wie etwa die Garofalo-Gleichung oder das Chaboche-Modell. Diese Arten der Beschreibung der Kriechdehnung sind jedoch hinsichtlich der erforderlichen Parametercharakterisierung sehr aufwendig und erfordern viel werkstoffwissenschaftliche Kenntnis.

Gemäß einer weiteren Ausführungsform der Erfindung ist vorgesehen, dass die Ermittlung der Kriechgeschwindigkeit ein Messwert der Bauteiltemperatur und/oder der Bauteilespannung eingeht. Die betreffende Temperatur bzw. Spannung können über direkte Messungen oder auch indirekte Messungen ermittelt werden. Wesentlich ist, dass durch eine Messung der Bauteilzustand zuverlässig erfasst werden kann. Insofern kann beispielsweise auch die Bauteilspannung auf Grundlage einer Gehäuseinnendruckmessung in der Gasturbine ermittelt werden. Die Bauteilspannung kann aber auch aus anderen Betriebsparametern berechnet werden bzw. je nach Bauteil auch eine feste Größe sein (z. B. Fliehkraftbelastung auf Nenndrehzahl bei rotierenden Bauteilen). Gleiches gilt auch für die Bauteiltemperatur, welche ebenfalls aus anderen Betriebsparametern abgeleitet werden kann. So kann etwa die Bauteiltemperatur im Bereich des Innengehäuses der Gasturbine aus der Verbrennungstemperatur bzw. der Abgastemperatur abgeleitet werden.

Gemäß einer weiteren Ausführungsform der Erfindung ist vorgesehen, dass die Berechnung der Gesamtkriechdehnung durch Aufsummierung von in zeitlicher Folge bestimmter einzelner Kriechdehnungen erfolgt. In anderen Worten wird die Gesamtkriechdehnung dadurch berechnet, dass Einzelbeiträge der Kriechdehnung über einzelne Zeitintervalle zu einem Gesamtwert summiert werden. Durch kontinuierliche Aufsummierung einzelner Beiträge über den Gesamtzeitraum kann so die Gesamtkriechdehnung bestimmt werden.

Die einzelnen Beiträge werden anschließend typischerweise, wie auch der auf ihrer Grundlage bestimmte Wert für die Gesamtkriechdehnung, jeweils auf einem Speichermedium abgespeichert. Insofern kann die zeitliche Entwicklung der Gesamtkriechdehnung verfolgt werden, wobei deren Berechnung einfach durch Addition von Einzelbeiträgen erfolgen kann. Die gespeicherten Werte erlauben dann zudem die zeitliche Vorhersage bzw. Analyse der Bauteilalterung. Aus einer kontinuierlich bestimmten Kriechgeschwindigkeit kann also ebenfalls kontinuierlich die Gesamtkriechdehnung berechnet werden, und zusammen mit den jeweiligen Zeitpunkten der Bestimmung auf einen Speichermedium abgelegt werden.

Gemäß einem weiteren Aspekt der Erfindung kann auch vorgesehen sein, dass mit der Berechnung der Gesamtkriechdehnung auch eine Lebensdauergröße bestimmt wird, auf deren Grundlage die zu erwartende Lebensdauer der gesamten Gasturbine bestimmt werden kann. Die Lebensdauergröße kann beispielsweise durch mathematische Extrapolation des zeitlichen Verlaufs der Gesamtkriechdehnung im Vergleich zu einem Grenzwert zu einem vorgegebenen Zeitpunkt berechnet werden, wobei der Verlauf angibt, wann der Grenzwert durch die Gesamtkriechdehnung überschritten wird. Die berechnete Lebensdauergröße zur Bestimmung der Lebensdauer kann aber etwa auch der aktuelle Betriebsstundenzähler sein, welcher die Summe der äquivalenten Betriebsstunden angibt. Ausführungsgemäß kann also zu jedem Zeitpunkt der Bestimmung des Gesamtkriechwerts auch die jeweils betreffende Lebensdauergröße bestimmt werden. Beide können auf einem Speichermedium abgelegt werden. Ergibt sich nun aus dem Verlauf der Lebensdauergröße eine unerwünschte zukünftig zu erwartende Lebensdauer des betreffenden Bauteils der Gasturbine, kann eine entsprechende Maßnahme zur Betriebsänderung der Gasturbine eingeleitet werden.

Gemäß einem weiteren Aspekt der vorliegenden Erfindung ist vorgesehen, dass der Grenzwert vom Gesamtzeitraum abhängig ist und für verschiedene Gesamtzeiträume unterschiedlich groß ist. So können etwa unterschiedliche Grenzwerte zu einem Bauteil definiert werden, die verschiedene Maßnahmen zur Einleitung einer Betriebsänderung zur Folge haben. Beispielsweise können die einzelnen Grenzwerte mit unterschiedlichen Alterungserscheinungen des jeweiligen Bauteils in Verbindung stehen. Ist etwa bei Erreichen der ersten Grenzwerte möglicherweise nur eine geringe Änderung des Betriebszustandes der Gasturbine erforderlich, so kann bei Erreichen von zeitlich nachfolgenden Grenzwerten ein stärkerer Eingriff in den Betriebszustand der Gasturbine erforderlich sein.

Gemäß einer weiteren vorteilhaften Ausführungsform der Erfindung ist vorgesehen, dass aufgrund des zeitlichen Verlaufs der Gesamtkriechdehnung über den Gesamtzeitraum eine Vorhersage für eine Gesamtkriechdehnung für einen späteren Zeitpunkt berechnet wird, wobei die Vorhersage angibt, wann die Gesamtkriechdehnung zu einem späteren Zeitpunkt einen Grenzwert erreicht oder diesen überschreitet. In anderen Worten kann aus dem bekannten Verlauf einer Gesamtkriechdehnung ein weiterhin zukünftig erwarteter Verlauf der Gesamtkriechdehnung abgeleitet werden. Führt dieser zu einem unerwünschten Verlauf, können entsprechende Maßnahmen zur Betriebsänderung der Gasturbine eingeleitet werden. Insofern kann bereits frühzeitig bei Kenntnis des Verlaufs der Gesamtkriechdehnung auf den weiteren zukünftigen Verlauf und damit auf den Alterungsprozess der einzelnen Bauteile der Gasturbine geschlossen werden.

Entsprechend einer vorteilhaften Ausführungsform der Erfindung ist vorgesehen, dass das Einleiten einer Maßnahme zur Betriebsänderung das Abregeln der Gasturbine umfasst. Das Abregeln bewirkt nämlich hierbei typischerweise einen Betrieb der Gasturbine bei geringen Temperaturen, wodurch eine geringere Kriechdehnung erreicht werden kann. Folglich kann damit der Alterungsprozess beim Betrieb der Gasturbine verlangsamt werden.

Nachfolgend soll die Erfindung anhand einzelner Figuren im Detail näher beschrieben werden. Hierbei ist darauf hinzuweisen, dass die in den Figuren mit gleichen Bezugszeichen versehenen technischen Merkmale gleiche technische Funktionen aufweisen.

Weiterhin ist darauf hinzuweisen, dass die nachfolgend beschriebenen technischen Merkmale in beliebiger Kombination miteinander sowie auch mit den vorab beschriebenen Ausführungsformen der Erfindung kombiniert werden können, soweit die daraus entstehende Kombination die der Erfindung zugrunde liegende Aufgabe lösen kann.

Ferner ist darauf hinzuweisen, dass die nachfolgenden Zeichnungen lediglich schematisch zu verstehen sind und damit keinerlei Einschränkung hinsichtlich der Ausführbarkeit der Erfindung zur Folge haben.

Hierbei zeigen:

FIG 1     eine flussdiagrammatische Darstellung einer ersten Ausführungsform des erfindungsgemäßen Verfahrens;

FIG 2     eine diagrammatische Darstellung des zeitlichen Verlaufs der Gesamtkriechdehnung eines Bauteils einer Gasturbine in Abhängigkeit von den äquivalenten Betriebsstunden (EOH); und

FIG 3     eine schematische Darstellung einer Ausführungsform der erfindungsgemäßen Gasturbine mit einer Regelvorrichtung.

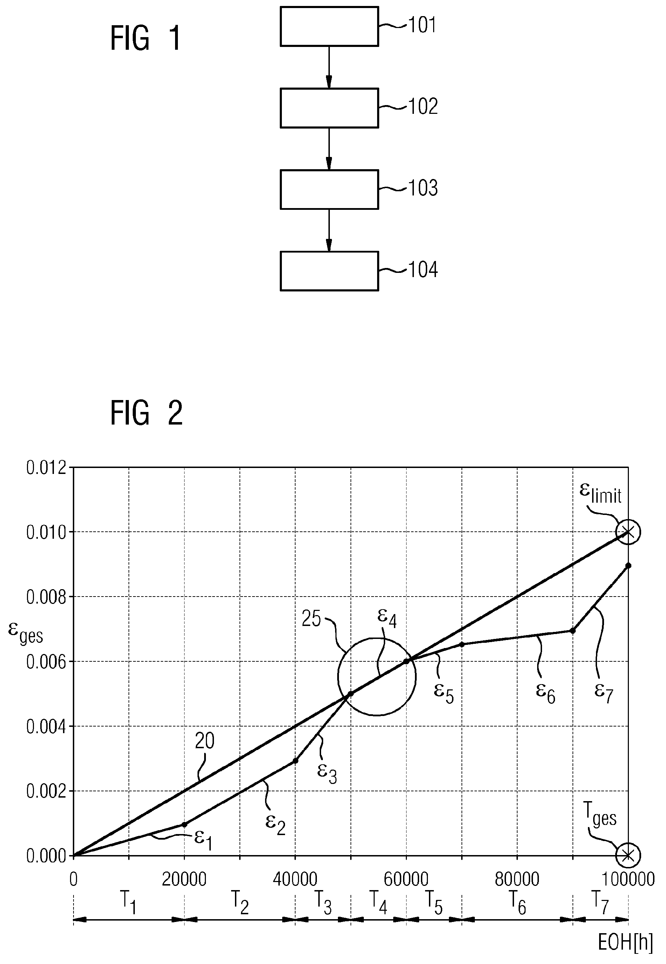

FIG 1 zeigt eine flussdiagrammatische Darstellung einer Ausführungsform des erfindungsgemäßen Verfahrens zum Betrieb einer Gasturbine 1, umfassend folgende Schritte:

- Ermitteln der Kriechgeschwindigkeit $d\varepsilon/dt$ wenigstens eines Bauteils 2 der Gasturbine 1 für ein vorbestimmtes Zeitintervall $T_i$ (erster Verfahrensschritt 101),
- Berechnung der Kriechdehnung $\varepsilon$ aus der Kriechgeschwindigkeit $d\varepsilon/dt$ für das wenigstens eine Bauteil 2 über das vorbestimmte Zeitintervall $T_i$ (zweiter Verfahrensschritt 102),
- Bestimmen der Gesamtkriechdehnung $\varepsilon_{ges}$ für einen Gesamtzeitraum $T_{ges}$, welcher das vorbestimmte Zeitintervall $T_i$ umfasst (dritter Verfahrensschritt 103), und
- Einleiten einer Maßnahme zur Betriebsänderung der Gasturbine 1, wenn die Gesamtkriechdehnung $\varepsilon_{ges}$ einen Grenzwert $\varepsilon_{limit}$ erreicht oder diesen überschreitet (vierter Verfahrensschritt 104).

FIG 2 zeigt eine diagrammatische Darstellung des zeitlichen Verlaufs der einzelnen Kriechdehnungen $\varepsilon$ (vorliegend auch als $\varepsilon_i$ bezeichnet zur besseren Unterscheidung) bzw. der Gesamtkriechdehnung $\varepsilon_{ges}$ in Abhängigkeit von der Betriebszeit, welche vorliegend als äquivalente Betriebsstunden (EOH) dargestellt ist. Hierbei ist zu erkennen, dass für einzelne vorbestimmte Zeitintervalle $T_i$ (i = 1 bis 7) jeweils einzelne Kriechdehnungen $\varepsilon_i$ (i = 1 bis 7) bestimmt wurden. Die Steigung der jeweiligen Abschnitte der Kriechdehnungen $\varepsilon_i$ entspricht der Kriechgeschwindigkeit $d\varepsilon/dt$ für die jeweils vorbestimmten Zeitintervalle $T_i$ (i = 1 bis 7). So weist etwa die für das Zeitintervall $T_1$ (0 bis 20.000 Stunden) bestimmte Kriechdehnung $\varepsilon_1$ eine deutlich geringere Kriechgeschwindigkeit $d\varepsilon/dt$ auf, als etwa die für das nachfolgende Zeitintervall (20.000 Stunden bis 40.000 Stunden) bestimmte Kriechdehnung $\varepsilon_2$. Je nach aktuellem Zeitpunkt, zu welchem die Gesamtkriechdehnung $\varepsilon_{ges}$ bestimmt wird, ergibt sich aus der Summe der vorherigen, einzelnen Kriechdehnungen $\varepsilon_i$ die jeweils aktuelle Gesamtkriechdehnung $\varepsilon_{ges}$. Wird beispielsweise die Gesamtkriechdehnung $\varepsilon_{ges}$ für den Zeitraum zwischen 0 und 40.000 Stunden bestimmt, beträgt die Gesamtkriechdehnung $\varepsilon_{ges}$ zum Zeitpunkt 40.000 Stunden etwa 0,003. Die Einheiten der Gesamtkriechdehnung $\varepsilon_{ges}$ sollen vorliegend nicht weiter betrachtet werden und wurden deswegen der Einfachheit halber zu 1 gesetzt.

Stellt sich nun beispielsweise, wie dargestellt, im nächsten Zeitintervall $T_3$ (40.000 Stunden bis 50.000 Stunden) eine nochmals erhöhte Kriechgeschwindigkeit $d\varepsilon/dt$ ein, so muss der Betreiber der Gasturbine möglicherweise mit einem unerwünschten vorzeitigen Alterungsprozess der jeweils betrachteten Bauteile rechnen. Wird nun die Gesamtkriechdehnung zu Ende des vorbestimmten Zeitintervalls $T_3$ (50.000 Stunden) bestimmt (etwa 0,005) mit einem Grenzwert $\varepsilon_{limit}$ verglichen, so kann sich herausstellen, dass die betrachtete Gesamtkriechdehnung $\varepsilon_{ges}$ bereits den Grenzwert $\varepsilon_{limit}$ erreicht hat. Der Wert $\varepsilon_{limit}$ ergibt sich vorliegend aus der Limit-Kurve 20, welche für alle Betriebszeitpunkte wiedergegeben ist. Da nun die Erreichung des Grenzwertes $\varepsilon_{limit}$ zu Ende des vorbestimmten dritten Zeitintervalls $T_3$ festgestellt

ist, kommt es zum Einleiten einer Maßnahme zur Betriebsänderung der Gasturbine 1. Diese Betriebsänderung wird vorliegend mit dem Bezugszeichen 25 veranschaulicht. Die Betriebsänderung 25 kann hierbei beispielsweise ein Abregeln der Gasturbine sein. Infolgedessen wird die Kriechgeschwindigkeit $d\varepsilon/dt$ für das nachfolgende vorbestimmte vierte Zeitintervall $T_4$ entsprechend verringert, so dass der Verlauf der Gesamtkriechdehnung $\varepsilon_{ges}$ im Wesentlichen dem Verlauf der Limit-Kurve 20 folgt. Weitere Änderungen des Betriebszustands der Gasturbine 1 können zeitlich nachfolgend ebenfalls noch erfolgen.

Aufgrund des Einleitens der Maßnahme zur Betriebsänderung der Gasturbine 1 kann nun diese innerhalb der dargestellten 100.000 Betriebsstunden stets unterhalb der Limit-Kurve 20 betrieben werden. Insbesondere erreicht zu Ende des siebten vorbestimmten Zeitintervalls $T_7$ die Gesamtkriechdehnung $\varepsilon_{ges}$ nicht den Grenzwert $\varepsilon_{limit}$ zum Gesamtzeitraum $T_{ges}$ (100.000 Stunden).

An dieser Stelle ist nochmals darauf hinzuweisen, dass der Grenzwert $\varepsilon_{limit}$ in Abhängigkeit des definierten Gesamtzeitraums $T_{ges}$ zu betrachten ist, wobei der Gesamtzeitraum variabel sein kann. Insbesondere kann der Gesamtzeitraum $T_{ges}$ auch mit den Enden der jeweils dargestellten einzelnen vorbestimmten Zeitintervallen $T_i$ (i = 1 bis 7) zusammenfallen. Darüber hinaus kann auch der aktuelle Zeitpunkt zur Bestimmung der jeweiligen Gesamtkriechdehnung $\varepsilon_{ges}$ variieren.

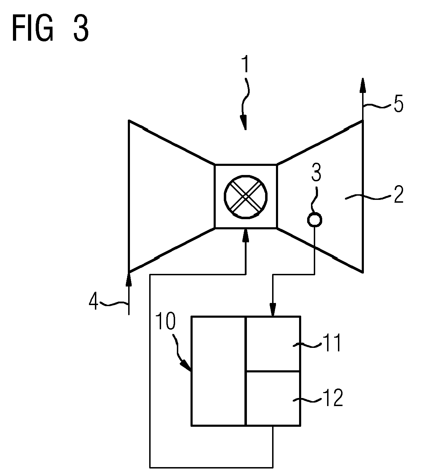

FIG 3 zeigt eine schematische Darstellung einer Ausführungsform der erfindungsgemäßen Gasturbine 1, welche mit einer Ausführungsform der erfindungsgemäßen Regelvorrichtung 10 versehen ist. Die Gasturbine 1 umfasst hierbei einen nicht weiter mit Bezugszeichen versehenen Verdichter, in welchen Ansaugluft 4 einströmt. Die verdichtete Ansaugluft wird nachfolgend in einen ebenfalls nicht mit Bezugszeichen versehenen Brennkammerbereich mit Brennstoff zusammen verbrannt und über einen ebenfalls nicht mit Bezugszeichen versehenen Entspannungsturbinenbereich abgeleitet. Das Arbeitsmedium wird anschließend als Abgas 5 aus der Gasturbine 1 ausgeleitet. Ist nun beispielsweise das betreffende Bauteil 2 ein Teil des Gehäuses der nicht mit Bezugszeichen versehenen Entspannungsturbine, so kann die Bauteiltemperatur mit Hilfe einer Messsonde 3 an diesem Gehäuse kontinuierlich ermittelt werden. Die Messwerte dieser Messsonde 3 werden der Regelvorrichtung 10 zugeführt, welche mit Hilfe einer Berechnungseinheit 11 die Ermittlung der Kriechgeschwindigkeit $d\varepsilon/dt$, die Berechnung der Kriechdehnung $\varepsilon$ aus der Kriechgeschwindigkeit $d\varepsilon/dt$, sowie die Bestimmung der Gesamtkriechdehnung $\varepsilon_{ges}$ für den gesamten Zeitraum $T_{ges}$ ermöglicht. Weiterhin umfasst die Regelvorrichtung 10 eine Regelungseinheit 12, welche die Betriebsänderung der Gasturbine 1 veranlasst, sollte die Gesamtkriechdehnung $\varepsilon_{ges}$ einen Grenzwert $\varepsilon_{limit}$ erreichen oder diesen überschreiten. Entsprechende Regelsignale werden von der Regelvorrichtung 10 der Gasturbine 1 zugeführt. Die Signalübermittlung von der Messsonde 3 an die Regelvorrichtung 10, sowie von der Regelvorrichtung 10 an die Gasturbine 1 sind vorliegend symbolisch mit Pfeilen gekennzeichnet, wobei jedoch der Fachmann die Daten- und Informationsströme leicht nachvollziehen kann.

Weitere Ausführungsformen ergeben sich aus den Unteransprüchen.

## Patentansprüche

1. Verfahren zum Betrieb einer Gasturbine (1) umfassend folgende Schritte:

   - Ermitteln der Kriechgeschwindigkeit ($d\varepsilon/dt$) wenigstens eines Bauteils (2) der Gasturbine (1) für ein vorbestimmtes Zeitintervall ($T_i$),
   - Berechnen der Kriechdehnung ($\varepsilon$) aus der Kriechgeschwindigkeit ($d\varepsilon/dt$) für das wenigstens eine Bauteil (2) über das vorbestimmte Zeitintervall ($T_i$),
   - Bestimmen der Gesamtkriechdehnung ($\varepsilon_{ges}$) für einen Gesamtzeitraum ($T_{ges}$), welcher das vorbestimmte Zeitintervall ($T_i$) umfasst und
   - Einleiten einer Maßnahme zur Betriebsänderung der Gasturbine (1) wenn die Gesamtkriechdehnung ($\varepsilon_{ges}$) einen Grenzwert ($\varepsilon_{limit}$) erreicht oder diesen überschreitet.

2. Verfahren nach Anspruch 1,
   **dadurch gekennzeichnet, dass** der Gesamtzeitraum ($T_{ges}$) Zeiten umfasst, welche alle in oder zeitlich vor dem vorbestimmten Zeitintervall ($T_i$) liegen.

3. Verfahren nach Anspruch 1,
   **dadurch gekennzeichnet, dass** der Gesamtzeitraum ($T_{ges}$) Zeiten umfasst, welche sowohl in oder zeitlich vor dem vorbestimmten Zeitintervall ($T_i$) liegen, wie auch zeitlich nach dem vorbestimmten Zeitintervall ($T_i$) liegen.

4. Verfahren nach einem der vorhergehenden Ansprüche,
   **dadurch gekennzeichnet, dass** die Kriechgeschwindigkeit ($d\varepsilon/dt$) mit Hilfe der Formel von Norton approximiert wird.

5. Verfahren nach einem der vorhergehenden Ansprüche,
**dadurch gekennzeichnet, dass** in die Ermittlung der Kriechgeschwindigkeit ($d\varepsilon/dt$) ein Messwert der Bauteiltemperatur und/oder der Bauteilspannung eingeht.

6. Verfahren nach einem der vorhergehenden Ansprüche,
**dadurch gekennzeichnet, dass** die Berechnung der Gesamtkriechdehnung ($\varepsilon_{ges}$) durch Aufsummierung von in zeitlicher Folge bestimmter einzelner Kriechdehnungen ($\varepsilon$) erfolgt.

7. Verfahren nach einem der vorhergehenden Ansprüche,
**dadurch gekennzeichnet, dass** mit der Berechnung der Gesamtkriechdehnung ($\varepsilon_{ges}$) auch eine Lebensdauergröße (L) bestimmt wird, auf deren Grundlage die zu erwartende Lebensdauer der gesamten Gasturbine (1) bestimmt werden kann.

8. Verfahren nach einem der vorhergehenden Ansprüche,
**dadurch gekennzeichnet, dass** der Grenzwert ($\varepsilon_{limit}$) vom Gesamtzeitraum ($T_{ges}$) abhängig ist und für verschiedene Gesamtzeiträume ($T_{ges}$) unterschiedlich groß ist.

9. Verfahren nach einem der vorhergehenden Ansprüche,
**dadurch gekennzeichnet, dass** aufgrund des zeitlichen Verlaufs der Gesamtkriechdehnung ($\varepsilon_{ges}$) über den Gesamtzeitraum ($T_{ges}$) eine Vorhersage für eine Gesamtkriechdehnung ($\varepsilon_{ges}$) für einen späteren Zeitpunkt berechnet wird, wobei die Vorhersage angibt, wann die Gesamtkriechdehnung ($\varepsilon_{ges}$) einen Grenzwert ($\varepsilon_{limit}$) erreicht oder überschreitet.

10. Verfahren nach einem der vorhergehenden Ansprüche,
**dadurch gekennzeichnet, dass** das Einleiten einer Maßnahme zur Betriebsänderung das Abregeln der Gasturbine (1) umfasst.

11. Regelvorrichtung (10), welche dazu ausgebildet ist, das Verfahren nach einem der Ansprüche 1 bis 8 auszuführen, wobei diese eine Berechnungseinheit (11) umfasst, welche die Ermittlung der Kriechgeschwindigkeit ($d\varepsilon/dt$), die Berechnung der Kriechdehnung ($\varepsilon$) aus der Kriechgeschwindigkeit ($d\varepsilon/dt$), sowie die Bestimmung der Gesamtkriechdehnung ($\varepsilon_{ges}$) für den Gesamtzeitraum ($T_{ges}$) ermöglicht, und fernerhin eine Regelungseinheit (12) umfasst, welche die Betriebsänderung der Gasturbine (1) veranlasst.

12. Gasturbine welche eine Regelvorrichtung (10) nach Anspruch 11 aufweist.

FIG 1

FIG 2

FIG 3

Europäisches Patentamt

European Patent Office

Office européen des brevets

# EUROPÄISCHER RECHERCHENBERICHT

Nummer der Anmeldung

EP 15 20 1553

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 2013 130494 A (HITACHI LTD) 4. Juli 2013 (2013-07-04) * das ganze Dokument * ----- | 1-9,12 | INV. F02C9/28 F01D17/04 G01M15/14 |
| Y | JP 2008 039649 A (CHUGOKU ELECTRIC POWER) 21. Februar 2008 (2008-02-21) * das ganze Dokument * ----- | 1-9,11, 12 | |
| Y | JP 2003 058234 A (HITACHI LTD) 28. Februar 2003 (2003-02-28) * das ganze Dokument * ----- | 1-3,5-9, 12 | |
| Y | JP H05 187603 A (HITACHI LTD) 27. Juli 1993 (1993-07-27) * Zusammenfassung; Abbildung 1 * ----- | 1-3,5,7, 8,10,11 | |
| Y | JP H06 66409 A (HITACHI LTD; BABCOCK HITACHI KK) 8. März 1994 (1994-03-08) * Zusammenfassung * ----- | 1-3,5-11 | |
| Y | CH 706 827 A2 (GEN ELECTRIC [US]) 14. Februar 2014 (2014-02-14) * Absätze [0011], [0021], [0038], [0060] - [0062], [0072], [0074], [0075], [0079], [0080]; Abbildungen 1-9 * ----- | 1-12 | RECHERCHIERTE SACHGEBIETE (IPC) F01D F02C G01M G07C G01N |
| Y | EP 2 078 946 A2 (GEN ELECTRIC [US]) 15. Juli 2009 (2009-07-15) * Absätze [0041], [0042]; Abbildungen 2-7 * ----- | 1-3,5-9, 11,12 | |

Der vorliegende Recherchenbericht wurde für alle Patentansprüche erstellt

| Recherchenort | Abschlußdatum der Recherche | Prüfer |
|---|---|---|
| München | 30. Mai 2016 | Koch, Rafael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 20 1553

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-05-2016

| Im Recherchenbericht angeführtes Patentdokument | Datum der Veröffentlichung | Mitglied(er) der Patentfamilie | Datum der Veröffentlichung |
|---|---|---|---|
| JP 2013130494 A | 04-07-2013 | JP 5506771 B2<br>JP 2013130494 A | 28-05-2014<br>04-07-2013 |
| JP 2008039649 A | 21-02-2008 | JP 4931511 B2<br>JP 2008039649 A | 16-05-2012<br>21-02-2008 |
| JP 2003058234 A | 28-02-2003 | KEINE | |
| JP H05187603 A | 27-07-1993 | JP 2574972 B2<br>JP H05187603 A | 22-01-1997<br>27-07-1993 |
| JP H0666409 A | 08-03-1994 | JP 2662706 B2<br>JP H0666409 A | 15-10-1997<br>08-03-1994 |
| CH 706827 A2 | 14-02-2014 | CH 706827 A2<br>CN 103592053 A<br>DE 102013108738 A1<br>JP 2014051971 A<br>US 2014052410 A1 | 14-02-2014<br>19-02-2014<br>20-02-2014<br>20-03-2014<br>20-02-2014 |
| EP 2078946 A2 | 15-07-2009 | CN 101482034 A<br>EP 2078946 A2<br>JP 5264517 B2<br>JP 2009168020 A<br>US 2009178417 A1 | 15-07-2009<br>15-07-2009<br>14-08-2013<br>30-07-2009<br>16-07-2009 |

EPO FORM P0461

Für nähere Einzelheiten zu diesem Anhang : siehe Amtsblatt des Europäischen Patentamts, Nr.12/82